(19) Europäisches Patentamt
European Patent Office
Office européen des brevets

(11) **EP 3 376 691 B1**

(12) **EUROPEAN PATENT SPECIFICATION**

(45) Date of publication and mention
of the grant of the patent:
**08.05.2019 Bulletin 2019/19**

(51) Int Cl.:
***H04B 17/00*** *(2015.01)* ***H04B 1/00*** *(2006.01)*

(21) Application number: **17160917.5**

(22) Date of filing: **14.03.2017**

(54) **TEST DEVICE AND TEST METHOD**

TESTVORRICHTUNG UND TESTVERFAHREN

DISPOSITIF ET PROCÉDÉ DE TEST

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.09.2018 Bulletin 2018/38**

(73) Proprietor: **Rohde & Schwarz GmbH & Co. KG
81671 München (DE)**

(72) Inventor: **KNEIDEL, Matthias
86937 Scheuring (DE)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**US-A1- 2002 031 166     US-A1- 2014 321 582
US-A1- 2016 254 870**

**Description**

TECHNICAL FIELD

The present invention relates to a test device for testing a device under test. The present invention further relates to a test method.

BACKGROUND

Although applicable in principal to any system that uses wireless signals, the present invention and its underlying problem will be hereinafter mainly described in combination with signal processing in LTE or 5G communication systems.

Mobile communications have become an essential component in the modern world comprising a wide range of technologies, services and applications. Three decades ago, mobile technology for voice communication was extremely expensive and therefore available to and used by only a few individuals. Today, mobile communications is a worldwide system with multiple different deployment scenarios and almost 8 billion subscribers. The common deployment scenarios service the market across a range of cost points and differ by content and services offered, reliability and performance, data rates and latency, degree of mobility, and complexity.

Since most deployment scenarios first arise with the evolution of technology, the development of a sustainable mobile communications infrastructure system is very challenging. One attempt of strategically providing such a system is the Long Term Evolution of UMTS, also known as LTE.

Powered by the continuous evolution of LTE, LTE Advanced and LTE Advanced Pro, user equipment manufacturers are competitively challenged by rapid development cycles of new mobile communication devices.

To support user equipment manufacturers in their prototyping phases, test equipment should provide fully operative and feature-complete systems within tight time frames. In this sector the resulting time pressure on development and production resulted in the use of a software defined radio approach to implement the radio communication in the test equipment.

Today's software defined radio systems make use of complex FPGA based systems to implement the required communication standards. However, development of software defined radio communications on such FPGA based systems is complex and time consuming. US 2014/0321582 A1 relates to a method for parallel data processing, comprising: receiving baseband data corresponding to multiple antennas from uplink data; converting the baseband data from time-domain signals to frequency-domain signals; processing the frequency-domain signals at least partially in parallel by multiple processing units in a general-purpose processor so as to restore transmitted code blocks; and constructing transmission block (TB) based on the transmitted code blocks.

Against this background, the problem addressed by the present invention is providing simplified software defined radio communications.

SUMMARY

The present invention solves this object by a test device, and a test method as defined in the independent claims.

Accordingly it is provided:

- A test device for testing a device under test, the test device comprising a number of antenna ports configured to receive signals from the device under test and/or transmit signals to the device under test, and a processor with at least one core for each one of the antenna ports, each core being configured to perform at least part of the physical channel processing for the respective antenna port.

Further, it is provided:

- A test method for testing a device under test, the test method comprising receiving signals from the device under test and/or transmitting signals to the device under test with a number of antenna ports, and performing at least part of the physical channel processing for each one of the antenna ports with at least one dedicated core of a processor.

Known methods of parallelizing the calculations for software defined radio data processing usually involve separately handling data streams in the communication system. However, there may exist data dependencies in the single processing steps that may lead to the single cores having to wait for the results of another core or having to repeat a calculation because of a write conflict to a specific memory address.

For example a calculation step may use input of various data streams and write output for the various data streams. Or a calculation step in one core may use a variable that is modified in another core forcing the core to wait for the calculation results of the other core.

The present invention overcomes these data dependencies by performing the calculations antenna-wise or per data stream, depending on how the data dependency may be resolved. To provide such a separation, the test device of the present invention uses at least one dedicated core to process single data streams or data for each antenna port of the test device.

In modern communication systems like e.g. LTE systems, the system specification determines which data elements or data words must be transmitted via each of the available antennas. This means that for every element in the data streams that are provided to the physical layer data processing of a software defined radio it is known in advance, which antenna port will transmit the respective element. This allows optimizing the necessary calculations.

The present invention distributes the calculations for performing the physical layer software defined radio processing such that conflicting write access to memory locations is prevented, while concurrent read access to memory locations is permitted. A basic principle of the present invention is therefore that one core performs calculations such that the data output does not conflict with the data output of other cores.

In modern high performance CPUs, like e.g. multicore x86-based CPUs, a plurality of cache lines are provided for caching memory access. While reading data from the same memory location with different cores is no problem with these cache lines, writing data to a specific memory location may cause the cache line to be reloaded or force the respective core to repeat a calculation based on the new content of the respective memory location. Such reloading or recalculating however reduces the performance of the algorithms and therefore limits the data rate of a software defined radio system.

However, since with the present invention no such conflicting write access to memory will occur, the present invention allows using general purpose multicore CPUs, like e.g. x86-based CPUs, to perform the calculations for a software defined radio based communication with increased performance, that will allow to implement future communication standards, like e.g. 5G communications, with software defined radios, at least in test equipment.

The use of general purpose multicore CPUs further provides faster development, since software for the CPUs can effectively be written in C++, whereas FPGAs require a time-intense hardware description language or cause high performance penalties when using abstract languages.

Further, cost efficient production of the test device is possible, since the cost of modern general purpose multicore CPUs, like e.g. an octa-core CPU such as an Intel Xeon processor, is lower than that of a FPGA co-processor. It is understood, that utilizing an additional processor, e.g. a PowerPC processor, and, for high throughput scenarios a further FPGA, in a multi-CPU platform would also be possible.

In addition, general purpose multicore CPUs provide a common instruction set allowing execution of software on different processor models including backward compatibility of future processors or the replacement of weaker performing CPUs and platforms. Finally, similar to the existing approaches, the approach of the present invention also supports the extension with co-processors allowing the offloading to specialized hardware components.

Further embodiments of the present invention are subject of the further subclaims and of the following description, referring to the drawings.

In a possible embodiment, the physical channel processing for outgoing data streams may comprise scrambling of the respective data stream and/or modulation of the respective data stream and/or layer mapping of the elements of the data streams for the antenna ports and/or precoding of the elements of the data stream for the antenna ports.

Scrambling and modulation of the data streams may e.g. be distributed on the different cores stream based, since these calculations do not depend on the single antenna ports but on the input data streams. It is understood, that the calculations will still be performed such that no write conflicts occur. If for example two input streams are provided to the software defined radio physical layer on a quad-core CPU, two cores may be used for processing every one of the streams. In case of an octa-core CPU, four cores may process every one of the streams.

Precoding, which is one of the most expensive (in terms of computational load) processing steps, may be performed separately by dedicated cores for each one of the antenna ports. The details of this separation will be explained below.

In a possible embodiment, for each outgoing data stream at least two cores may be configured to perform parallel scrambling of consecutive data blocks of the respective data stream by applying a scrambling function with a variant parameter.

The size of the data blocks may vary between implementations. In a LTE system, a block size with a multiple of 4 would be beneficial. On modern x86-based CPUs the cache lines usually comprise 256 bytes each. Therefore on x86-based CPUs the block size may be chosen to be 256 bytes.

In a simplified example scrambling may be seen as applying a variant parameter, like $x_{n+1} = x_n + 1$, to the single elements of a data block. On a first core the factor $x_0$ would be applied to the first element, the factor $x_1$ would be applied to the second element and so in until to the 256-th element the factor $x_{255}$ would be applied. At the same time on a second core the factor $x_{256}$ would be applied to the 257-th element, and so on.

In a possible embodiment, every core may be configured to calculate the variant parameter of the scrambling function for the first element of each block of the respective data stream that is processed by the respective core.

If in the above example the second core would wait for the first core to calculate the value of the 256-th variant parameter $x_{255}$ no speed-up could be achieved. The same applies to the first core when processing the third block and the second core when processing the fourth block and so on.

Therefore, in the present invention since the calculation of the variant parameter is very inexpensive (in terms of computational load) compared to waiting for another processor core, every core calculates the variant parameter for the elements that are not processed by the core itself to receive the value of the variant parameter that is needed by the respective core to process the next element.

This means that e.g. in the above example the second core will calculate $x_{256}$, the first core will calculate $x_{512}$, and so on.

In a possible embodiment, for each outgoing data stream at least two cores may be configured to perform parallel modulation of consecutive data blocks of the respective data stream by determining for every element of the respective block a corresponding modulation symbol.

Determining the modulation symbols may e.g. be performed by looking the modulation symbols up in a look-up table. Two cores may e.g. divide a data stream into equally sized blocks and perform the necessary look-up on the elements of the respective blocks. The size of the blocks may be determined as already explained above and may be 256 bytes on x86-based CPUs.

If the modulation is performed data stream based, the modulation symbols for the data streams will be available as consecutive data in memory. In a possible embodiment, for each antenna port one core may therefore be configured to perform layer mapping for the outgoing data streams by reading the modulation symbols for the respective antenna and storing in each case the modulation symbols of one antenna consecutively in a dedicated memory region of a memory of the test device.

In for example LTE systems it is known in advance, which elements of which data stream must be transmitted on which antenna port. The layer mapping may therefore be seen as a kind of sorting of the stream-wise arranged symbols into antenna-wise arranged symbols.

This rearrangement requires consecutive read access to the memory and uses random write access to the memory to store the modulation symbols of the data streams for each antenna port.

In a possible embodiment, for each antenna port one core may be configured to perform modulation of respective elements of the data streams by determining for every one of the elements a corresponding modulation symbol and storing in each case the modulation symbols of one antenna port consecutively in a dedicated memory region of a memory of the test device. This means that one core will only read those modulation symbols of a data stream that should be transmitted over the respective antenna. Instead of reading the complete data stream or complete blocks of the data stream, the core will jump to the needed elements or modulation symbols in the respective stream or the respective plurality of streams. The result will be a consecutive series of modulation symbols in memory that must be transmitted over one single antenna port.

Since random write access to a memory, especially on x86-based CPUs, is more expensive (in terms of computational load or time), than a random read access, separating the modulation symbols antenna-wise allows performing the required "inexpensive" random read access and an efficient consecutive write access to the memory per antenna port and core.

In a possible embodiment, for each antenna port one core may be configured to perform precoding by multiplying the modulation symbols for the respective antenna port with the respective row of a predefined modulation matrix and in each case consecutively storing the respective precoded symbols of one antenna.

Precoding may be the most complex processing step in the physical layer data handling. Usually precoding comprises a matrix multiplication or a matrix vector multiplication. The modulation matrix for the matrix modulation will usually be predefined, e.g. by the communication standard or the equipment manufacturer of the device under test. Further, a vector that must be multiplied with the matrix will contain one symbol for each antenna.

For a two antenna system, the precoding of modulation symbols that are sent out at time i may be as follows:

$$P_i = \begin{vmatrix} m_{11} & m_{12} \\ m_{21} & m_{22} \end{vmatrix} * \begin{vmatrix} S_{1i} \\ S_{2i} \end{vmatrix}$$

In common software defined radio systems, a first core would calculate the result for step i, and a second core would calculate the result for step i+1. Then the first core would calculate the result for step i+2, and a second core would calculate the result for step i+3, and so on. However, this approach requires random write access to the memory of the test device, since the data for the single antennas is stored consecutively. This means that every processor would first access the array for the first antenna and then the array for the second antenna and this would repeat for every value of i. Further, since e.g. memory width may be 32 bit a write access of a single byte may happen in a cell that is also used for data of another antenna port. This may trigger a reloading of the cache line or a recalculation as already explained above.

With the present invention, the random write is prevented by dedicating one core for every antenna port.

With the present invention the first core would calculate for all values of P for the first antenna:

$$P_{1i} = \begin{vmatrix} m_{11} & m_{12} \end{vmatrix} * \begin{vmatrix} S_{1i} \\ S_{2i} \end{vmatrix}$$

The second core would calculate for all values of P for the second antenna:

$$P_{2i} = \begin{vmatrix} m_{21} & m_{22} \end{vmatrix} * \begin{vmatrix} S_{1i} \\ S_{2i} \end{vmatrix}$$

This is scalable to any number of antenna ports and cores.

With the above approach the single cores may write the results of $P_i$ of a single antenna port for all values of i consecutively into an array in the memory and no random write will occur.

The above makes clear why the present invention is especially beneficial with systems or CPUs where random read is much more inexpensive than random write to memory.

In a possible embodiment, the physical channel processing for incoming data streams may comprise time estimation and cyclic prefix removal and/or OFDM generation and/or channel estimation and equalization and/or precoding.

In a possible embodiment, for every antenna port one core may be configured to perform time estimation and cyclic prefix removal and/or OFDM generation and/or channel estimation and equalization and/or precoding. For each antenna port one core may be configured to perform precoding by multiplying the modulation symbols for the respective antenna port with the respective row of a predefined modulation matrix and in each case consecutively storing the respective precoded symbols of one antenna.

All the explanations given above for the generation or transmission of data streams via software defined radio also apply to the reception of data signals and the evaluation of the data signals via software defined radio.

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1     shows a block diagram of an embodiment of a test device according to the present invention;

Fig. 2     shows a signal chain in an embodiment of a test device according to the pre-sent invention;

Fig. 3     shows a diagram of the scrambling of data streams according to the present invention;

Fig. 4     shows a diagram of the modulation of data streams according to the present invention;

Fig. 5     shows a diagram of the precoding of data streams according to the present invention; and

Fig. 6     shows a flow diagram of an embodiment of a test method according to the present invention.

The appended drawings are intended to provide further under-standing of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

DETAILED DESCRIPTION OF THE DRAWINGS

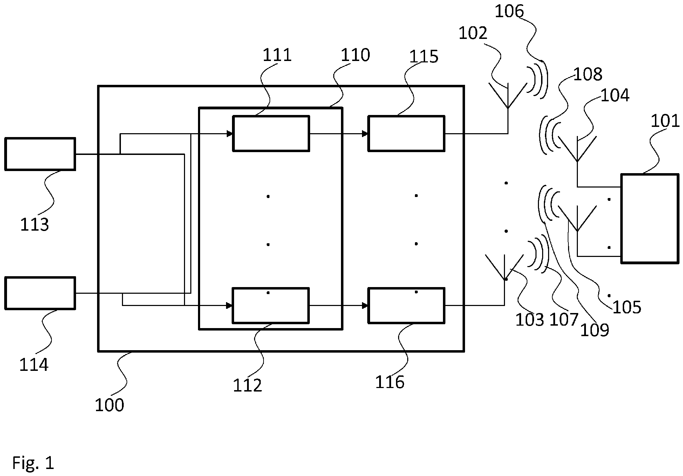

Fig. 1 shows a block diagram of a test device 100. The test device 100 is used to test a device under test 101 via at least two antenna ports 102, 103 of the test device 100 and at least two antenna ports 104, 105 of the device under test 101. The test device 100 and the device under test 101 communicate via wireless signals 106, 107, 108, 109. It is understood that this arrangement is just an example and serves the explanation of the principles of the present invention. It is further understood, that any other number of antenna ports may be present at the test device 100 or the device under test 101. Further, the signals 106, 107, 108, 109 may also be transmitted via cables, especially in a test scenario.

The test device 100 comprises a processor 110, which comprises at least one core 111, 112 for every one of the antenna ports 102, 103. Further, the test device 100 comprises an analogue stage 115, 116 for every antenna port 102, 103. The analogue stage 115, 116 may comprise any number of elements, like e.g. filters, attenuators, amplifiers or the like, that may be necessary to generate the signals 106, 107 or receive signals 108, 109.

Two data streams 113, 114 are exemplarily provided to the test device 100, where the cores 111, 112 perform the necessary processing of the data streams 113, 114 and generate the signals that are then processed by the analogue stages 115, 116.

The single processing tasks that have to be performed by the cores 111, 112 are distributed and arranged between the cores 111, 112 such that conflicting write accesses or random write accesses to a memory of the test device 100 (not explicitly shown) are minimized or prevented completely.

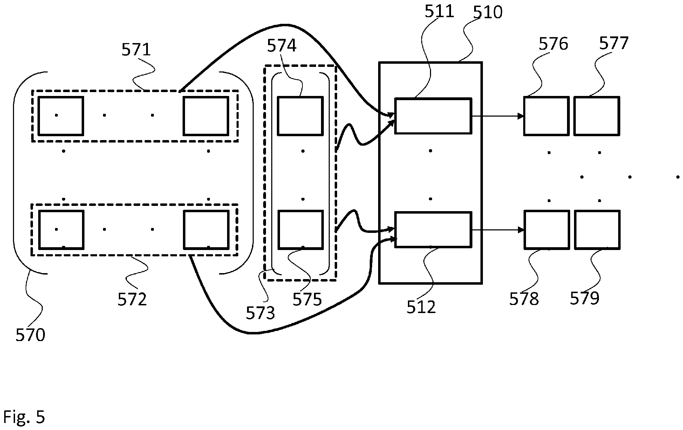

This is especially implemented by separating data that is e.g. provided in a single data array, like a single data stream 113, 114, into single blocks or data elements that pertain to a single one of the antenna ports 102, 103. This concept will e.g. be explained in conjunction with Fig. 5.

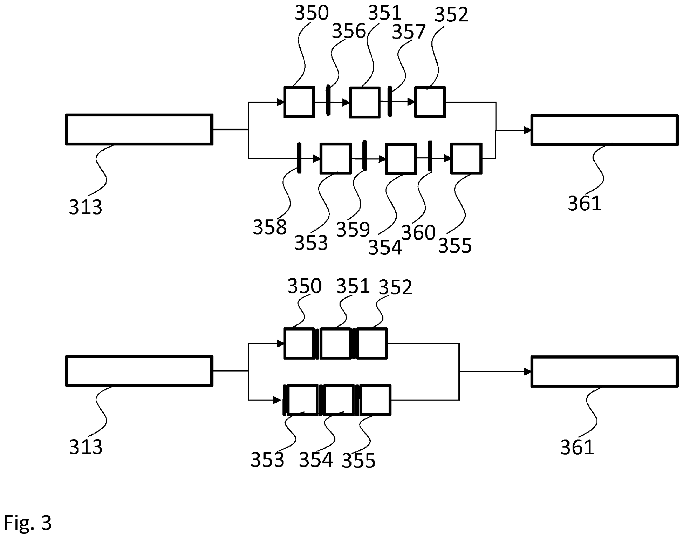

Another core concept of the present invention is that single cores 111, 112 do not wait for another core to finish a computation, if e.g. an intermediate value is needed. Instead the respective core 111, 112 will calculate that value by itself, at least of it is less expensive in terms of computational effort or time than waiting for the result of the other core. This concept will be explained in conjunction with Fig. 3.

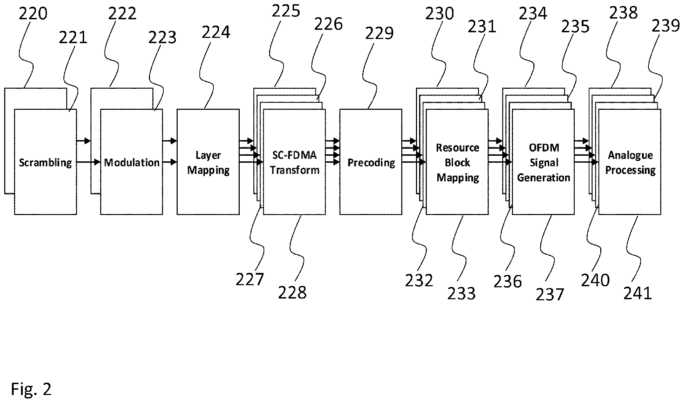

Fig. 2 shows a signal chain that may be applied to the test device 100. The exemplary signal chain is shown for a system that is provided with two input data streams that are sent out via four antennas.

The signal chain comprises scrambling 220, 221 of the data stream, modulation 222, 223 of the data streams, layer mapping 224 of the elements of the data streams for the antennas, SC-FDMA transforming 225, 226, 227, 228, precoding 229 of the elements of the data streams for the antenna ports, resource block mapping 230, 231, 232, 233, OFDM signal generation 234, 235, 236, 237, and analogue processing 238, 239, 240, 241.

The steps that are shown twice, i.e. scrambling 220, 221 and modulation 222, 223, may be parallelized for the single input data streams, because there are no dependencies between the calculations performed on the input data streams. During parallelization the cores working on one data stream may calculate intermediate values instead of waiting for the results of the other cores.

The steps that are shown four times, i.e. SC-FDMA transforming 225, 226, 227, 228, resource block mapping 230, 231, 232, 233, OFDM signal generation 234, 235, 236, 237, and analogue processing 238, 239, 240, 241, may be parallelized for the four antennas, because there are no dependencies between the calculations performed on the data for the single antennas.

However, the steps of layer mapping 224 and precoding 229 may require data operations on the input data streams that are interdependent for the four antennas and may cause conflicting or random write access to memory, which in terms of computations is expensive.

In the following, only the steps of scrambling 220, 221, modulation 222, 223 and precoding 229 will be explained in detail, since they comprise the core concepts of the present invention. It is understood however, that these concepts may eventually also be applied to any of the other steps of the signal chain.

Fig. 3 shows a diagram of the scrambling of a data stream 313 into a scrambled data stream 361.

The data stream 313 is separated into single data blocks 350, 351, 352, 353, 354, 355, that are processed by two cores in an interleaved manner, i.e. a first core processes blocks 350, 351, 352 and a second core processes blocks 353, 354, 355.

In the upper diagram of Fig. 3, the processing is shown as consecutive processing by two cores. It is understood that this diagram only serves to exemplify the partitioning of the data stream onto the two cores.

In fact, the actual processing will be performed as shown in the lower diagram. There it is shown that the single data blocks 350, 351, 352, 353, 354, 355 are processed in parallel by the single cores.

# EP 3 376 691 B1

Scrambling in a simplified example may involve applying a variant parameter, like $x_{n+1} = x_n + 1$, to the single elements of the data blocks 350, 351, 352, 353, 354, 355. This means that the values of $x_n$ for the respective elements of the data blocks 350, 351, 352, 353, 354, 355 must be known to the respective core.

This is no problem for the first core and the first element of the first data block 350, since the value of $x_n$ will be a predefined start value.

However, if the first core e.g. processes a block of 256 bytes, the second core will start to process a block starting the 257-th byte of the data stream 313. Therefore, the second core will need the value of $x_{256}$. According to the present invention, instead of waiting for the first core to finish his calculations, the second core will perform calculation 358 of $x_{256}$. The same will happen, shown as 356, 357, 359, 360, in the first core and the second core between the processing of the single blocks 350, 351, 352, 353, 354, 355.

Therefore, no core needs to wait for any processing results of the other core or needs to write data to a memory section that is needed by the other cores.

Therefore, the speed of the scrambling will scale almost linearly with the number of cores used for processing each single data stream, but for the short amount of time needed for the calculation of the variant parameter x.

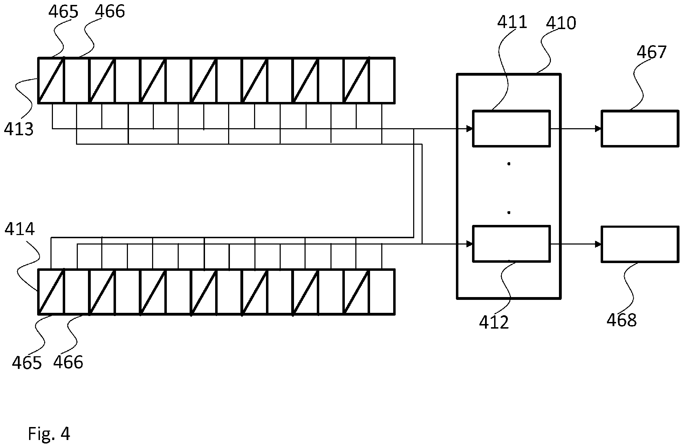

Fig. 4 shows a diagram of the modulation of data streams, where the layer mapping is implicitly performed. It is understood, that as an alternative the modulation may also be performed stream-wise, in analogy to the step of scrambling, and that the step of layer mapping may be performed afterwards.

In Fig. 4 two data streams 413, 414 are processed by two cores 411, 412 of a processor 410. The data streams each comprise data elements 465, shown as crossed out, for a first antenna port and data elements 466, shown as not-crossed out, for a second antenna port in an alternating arrangement.

Instead of processing every stream 413, 414 with a single core, which would result in consecutive read access, stream-wise, but a random write access, antenna-wise, to memory, in the present invention, every core 411, 412 is dedicated to one of the antennas.

This means that the core 411 will only read data elements 465 for the first antenna, while core 412 will only read data elements 466 for the second antenna. The cores 411, 412 will perform the modulation, e.g. by looking up the respective complex valued modulation symbols in a look up table, LUT, and storing the modulation symbols for the respective antenna in a consecutive memory section, e.g. as an array 467, 468.

This arrangement of the present invention leads to random read access to memory, when the cores 411, 412 read the data elements 465, 466 of the respective antenna from two data streams 413, 414. However, the output 467, 477 of the modulation is written consecutively by the respective cores 411, 412 into different consecutive memory sections. Therefore, only cheap (in terms of computational effort) random read access and consecutive write access is performed, instead of expensive random write access. Further, the step of layer mapping may be omitted, since the output 467, 468 is already sorted per antenna port.

Fig. 5 shows a diagram of the precoding of data streams.

Precoding comprises a matrix multiplication or a matrix vector multiplication. The modulation matrix 570 for the modulation will usually be predefined, e.g. by the communication standard or the equipment manufacturer of the device under test. Further, a vector 573 that must be multiplied with the matrix will contain one symbol for each antenna port and element in the antenna-wise mapped data streams. That means that a plurality of vectors 573 may be provided, the number of vectors being equal to the length of the data streams. As an alternative a matrix containing all the vectors may be provided and a matrix - matrix multiplication may be performed.

For ease of understanding the step of precoding will be explained with a matrix - vector multiplication. It is however understood that the same principle may be applied to a matrix - matrix multiplication.

The principle behind the precoding according to the present invention lies in separating the matrix - vector multiplication into a vector - vector multiplication per antenna port.

For a two antenna port system, the precoding of modulation symbols that are sent out at time i may be performed as follows:

$$P_i = \begin{vmatrix} m_{11} & m_{12} \\ \\ m_{21} & m_{22} \end{vmatrix} * \begin{vmatrix} S_{1i} \\ \\ S_{2i} \end{vmatrix}$$

$P_i$ is the vector comprising the precoded symbols for the two antenna ports and time i, $m_{11}$ and $m_{12}$ are parameters for the first antenna port, and $m_{21}$ and $m_{22}$ are parameters for the second antenna port. $S_{1i}$ is the symbol for the first antenna port at time i, and $S_{2i}$ is the symbol for the second antenna port at time i.

With the present invention, the random write is prevented by dedicating one core 511, 512 for every antenna port.

With the present invention the first core 511 will calculate all values of P for the first antenna port by multiplying the row 571 of the matrix 570 with the vector 573:

$$P_{1i} = \begin{vmatrix} m_{11} & m_{12} \end{vmatrix} * \begin{vmatrix} S_{1i} \\ \\ S_{2i} \end{vmatrix}$$

The second core 512 will calculate all values of P for the second antenna port by multiplying the row 572 of the matrix 570 with the vector 573:

$$P_{2i} = \begin{vmatrix} m_{21} & m_{22} \end{vmatrix} * \begin{vmatrix} S_{1i} \\ \\ S_{2i} \end{vmatrix}$$

This is scalable to any number of antenna ports and cores 511, 512.

With the above approach the single cores 511, 512 may write the results of $P_i$ for all values of i consecutively into an array in the memory and no random write will occur, as opposed to calculating a matrix - vector multiplication with a single core for all antennas.

For ease of understanding, the reference signs used above for the apparatus-based figures will also be used in the explanation of the method-based figure below.

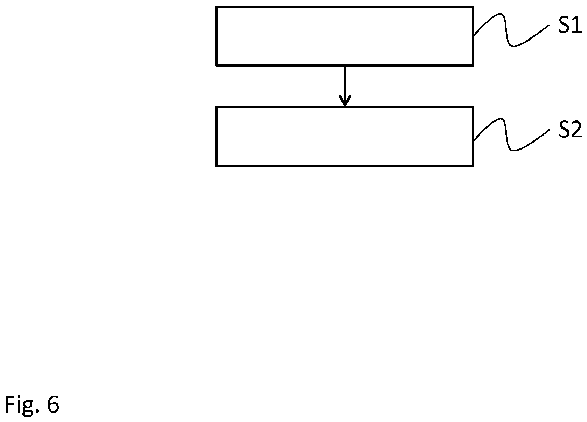

Fig. 6 shows a flow diagram of a test method for testing a device under test 101.

The test method comprises receiving S1 signals 106, 107, 108, 109 from the device under test 101 and/or transmitting signals 106, 107, 108, 109 to the device under test 101 with a number of antenna ports 102, 103, 104, 105.

In addition, at least part of the physical channel processing is performed S2 for each one of the antenna ports 102, 103, 104, 105 with at least one dedicated core 111, 112, 411, 412, 511, 512 of a processor 110, 410, 510.

The physical channel processing S2 for outgoing data streams 113, 114, 313, 413, 414 may e.g. comprises scrambling 220, 221 of the respective data stream 113, 114, 313, 413, 414, modulation 222, 223 of the respective data stream 113, 114, 313, 413, 414, layer mapping 224 of the elements of the data streams 113, 114, 313, 413, 414 for the antenna ports 102, 103, 104, 105, and precoding 229 of the elements of the data stream 113, 114, 313, 413, 414 for the antenna ports 102, 103, 104, 105. Further, steps may be applied, however, if they can be trivially parallelized they are not explicitly treated here.

For example, for each outgoing data stream 113, 114, 313, 413, 414 at least two cores 111, 112, 411, 412, 511, 512 may perform parallel scrambling 220, 221 of consecutive data blocks of the respective data stream 113, 114, 313, 413, 414 by applying a scrambling function 220, 221 with a variant parameter 356, 357, 358, 359, 360.

Every core 111, 112, 411, 412, 511, 512 may e.g. calculate the variant parameter 356, 357, 358, 359, 360 of the scrambling function 220, 221 for the first element of each block of the respective data stream 113, 114, 313, 413, 414 that is processed by the respective core 111, 112, 411, 412, 511, 512.

In addition, for each outgoing data stream 113, 114, 313, 413, 414 at least two cores 111, 112, 411, 412, 511, 512 may perform parallel modulation 222, 223 of consecutive data blocks of the respective data stream 113, 114, 313, 413, 414 by determining for every element of the respective block a corresponding modulation symbol. For example, one core 111, 112, 411, 412, 511, 512 may perform for each antenna port 102, 103, 104, 105 layer mapping 224 for the outgoing data streams 113, 114, 313, 413, 414 by reading the modulation symbols for the respective antenna and stores in each case the modulation symbols of one antenna consecutively in a dedicated memory region of a memory of the test device 100.

As an alternative, for each antenna port 102, 103, 104, 105 one core 111, 112, 411, 412, 511, 512 may perform modulation 222, 223 of respective elements of the data streams 113, 114, 313, 413, 414 by determining for every element a corresponding modulation symbol and storing in each case the modulation symbols of one antenna consecutively in a dedicated memory region of a memory of the test device 100.

In addition, for each antenna port 102, 103, 104, 105 one core 111, 112, 411, 412, 511, 512 may perform precoding 229 by multiplying the modulation symbols for the respective antenna port 102, 103, 104, 105 with the respective row 571, 572 of a predefined modulation matrix 570 and in each case consecutively storing the respective precoded symbols of one antenna.

For incoming data streams the physical channel processing for incoming data streams 113, 114, 313, 413, 414 may comprises time estimation and cyclic prefix removal, OFDM generation, channel estimation and equalization, and precoding 229.

For every antenna port 102, 103, 104, 105 one core 111, 112, 411, 412, 511, 512 may e.g. perform time estimation and cyclic prefix removal, OFDM generation, channel estimation and equalization, and precoding 229 of incoming data streams.

Precoding may especially be performed for each antenna port 102, 103, 104, 105 on incoming data streams by one core 111, 112, 411, 412, 511, 512 by multiplying the modulation symbols for the respective antenna port 102, 103, 104, 105 with the respective row 571, 572 of a predefined modulation matrix 570 and in each case consecutively storing the respective precoded symbols of one antenna.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

List of reference signs

| | |
|---|---|
| 100 | test device |
| 101 | device under test |
| 102, 103, 104, 105 | antenna port |
| 106, 107, 108, 109 | signal |
| 110, 410, 510 | processor |
| 111, 112, 411, 412 | core |
| 511, 512 | core |
| 113, 114, 313 | data stream |
| 413, 414 | data stream |
| 115, 116 | analogue stage |
| | |
| 220, 221 | scrambling function |
| 222, 223 | modulation function |
| 224 | layer mapping |
| 225, 226, 227, 228 | SC-FDMA transform function |
| 229 | precoding function |
| 230, 231, 232, 233 | resource block mapping function |
| 234, 235, 236, 237 | OFDM signal generation function |
| 238, 239, 240, 241 | analogue processing |
| | |
| 350, 351, 352 | block |
| 353, 354, 355 | block |

356, 357       variant parameter
358, 359, 360       variant parameter

361     scrambled stream

465, 466     antenna port specific element
467, 468     antenna port specific stream

570                  matrix
571, 572           matrix row
573                  vector
574, 575           vector element
576, 577, 578, 579     antenna port specific element

S1, S2     method steps

**Claims**

1. Test device (100) for testing a device under test (101), the test device (100) comprising:

   a number of antenna ports (102, 103, 104, 105) configured to receive signals (106, 107, 108, 109) from the device under test (101) and/or transmit signals (106, 107, 108, 109) to the device under test (101), and
   a processor (110, 410, 510) with at least one core (111, 112, 411, 412, 511, 512) for each one of the antenna ports (102, 103, 104, 105), each core (111, 112, 411, 412, 511, 512) being configured to perform at least part of the physical channel processing for the respective antenna port (102, 103, 104, 105),
   wherein the physical channel processing for outgoing data streams (113, 114, 313, 413, 414) comprises scrambling (220, 221) of the respective data stream (113, 114, 313, 413, 414),
   wherein for each outgoing data stream (113, 114, 313, 413, 414) at least two cores (111, 112, 411, 412, 511, 512) are configured to perform parallel scrambling (220, 221) of consecutive data blocks of the respective data stream (113, 114, 313, 413, 414) by applying a scrambling function (220, 221) with a variant parameter (356, 357, 358, 359, 360), and
   wherein every core (111, 112, 411, 412, 511, 512) is configured to calculate the variant parameter (356, 357, 358, 359, 360) of the scrambling function (220, 221) for the first element of each block of the respective data stream (113, 114, 313, 413, 414) that is processed by the respective core (111, 112, 411, 412, 511, 512).

2. Test device (100) according to claim 1, wherein the physical channel processing for outgoing data streams (113, 114, 313, 413, 414) comprises modulation (222, 223) of the respective data stream (113, 114, 313, 413, 414) and/or layer mapping (224) of the elements of the data streams (113, 114, 313, 413, 414) for the antenna ports (102, 103, 104, 105) and/or precoding (229) of the elements of the data stream (113, 114, 313, 413, 414) for the antenna ports (102, 103, 104, 105).

3. Test device (100) according to any one of the preceding claims, wherein for each outgoing data stream (113, 114, 313, 413, 414) at least two cores (111, 112, 411, 412, 511, 512) are configured to perform parallel modulation (222, 223) of consecutive data blocks of the respective data stream (113, 114, 313, 413, 414) by determining for every element of the respective block a corresponding modulation symbol.

4. Test device (100) according to claim 3, wherein for each antenna port (102, 103, 104, 105) one core (111, 112, 411, 412, 511, 512) is configured to perform layer mapping (224) for the outgoing data streams (113, 114, 313, 413, 414) by reading the modulation symbols for the respective antenna and storing in each case the modulation symbols of one antenna consecutively in a dedicated memory region of a memory of the test device (100).

5. Test device (100) according to any one of the preceding claims 1 to 2, wherein for each antenna port (102, 103, 104, 105) one core (111, 112, 411, 412, 511, 512) is configured to perform modulation (222, 223) of respective elements of the data streams (113, 114, 313, 413, 414) by determining for every element a corresponding modulation symbol and storing in each case the modulation symbols of one antenna consecutively in a dedicated memory region of a memory of the test device (100).

EP 3 376 691 B1

6. Test device (100) according to any one of the preceding claims, wherein for each antenna port (102, 103, 104, 105) one core (111, 112, 411, 412, 511, 512) is configured to perform precoding (229) by multiplying the modulation symbols for the respective antenna port (102, 103, 104, 105) with the respective row (571, 572) of a predefined modulation matrix (570) and in each case consecutively storing the respective precoded symbols of one antenna.

7. Test device (100) according to any one of the preceding claims, wherein the physical channel processing for incoming data streams (113, 114, 313, 413, 414) comprises time estimation and cyclic prefix removal and/or OFDM generation and/or channel estimation and equalization and/or precoding (229), and
wherein for every antenna port (102, 103, 104, 105) one core (111, 112, 411, 412, 511, 512) is configured to perform time estimation and cyclic prefix removal and/or OFDM generation and/or channel estimation and equalization and/or precoding (229),
especially wherein for each antenna port (102, 103, 104, 105) one core (111, 112, 411, 412, 511, 512) is configured to perform precoding (229) by multiplying the modulation symbols for the respective antenna port (102, 103, 104, 105) with the respective row (571, 572) of a predefined modulation matrix (570) and in each case consecutively storing the respective precoded symbols of one antenna.

8. Test method for testing a device under test (101), the test method comprising:

receiving (S1) signals (106, 107, 108, 109) from the device under test (101) and/or transmitting signals (106, 107, 108, 109) to the device under test (101) with a number of antenna ports (102, 103, 104, 105), and
performing (S2) at least part of the physical channel processing for each one of the antenna ports (102, 103, 104, 105) with at least one dedicated core (111, 112, 411, 412, 511, 512) of a processor (110, 410, 510), wherein the physical channel processing for outgoing data streams (113, 114, 313, 413, 414) comprises scrambling (220, 221) of the respective data stream (113, 114, 313, 413, 414),
wherein for each outgoing data stream (113, 114, 313, 413, 414) at least two cores (111, 112, 411, 412, 511, 512) perform parallel scrambling (220, 221) of consecutive data blocks of the respective data stream (113, 114, 313, 413, 414) by applying a scrambling function (220, 221) with a variant parameter (356, 357, 358, 359, 360), and
wherein every core (111, 112, 411, 412, 511, 512) calculates the variant parameter (356, 357, 358, 359, 360) of the scrambling function (220, 221) for the first element of each block of the respective data stream (113, 114, 313, 413, 414) that is processed by the respective core (111, 112, 411, 412, 511, 512).

9. Test method according to claim 8, wherein the physical channel processing for outgoing data streams (113, 114, 313, 413, 414) comprises modulation (222, 223) of the respective data stream (113, 114, 313, 413, 414) and/or layer mapping (224) of the elements of the data streams (113, 114, 313, 413, 414) for the antenna ports (102, 103, 104, 105) and/or precoding (229) of the elements of the data stream (113, 114, 313, 413, 414) for the antenna ports (102, 103, 104, 105).

10. Test method according to any one of the preceding claims 8 to 9, wherein for each outgoing data stream (113, 114, 313, 413, 414) at least two cores (111, 112, 411, 412, 511, 512) perform parallel modulation (222, 223) of consecutive data blocks of the respective data stream (113, 114, 313, 413, 414) by determining for every element of the respective block a corresponding modulation symbol, especially, wherein for each antenna port (102, 103, 104, 105) one core (111, 112, 411, 412, 511, 512) performs layer mapping (224) for the outgoing data streams (113, 114, 313, 413, 414) by reading the modulation symbols for the respective antenna and stores in each case the modulation symbols of one antenna consecutively in a dedicated memory region of a memory of the test device (100); or
wherein for each antenna port (102, 103, 104, 105) one core (111, 112, 411, 412, 511, 512) performs modulation (222, 223) of respective elements of the data streams (113, 114, 313, 413, 414) by determining for every element a corresponding modulation symbol and storing in each case the modulation symbols of one antenna consecutively in a dedicated memory region of a memory of the test device (100).

11. Test method according to any one of the preceding claims 8 to 10, wherein for each antenna port (102, 103, 104, 105) one core (111, 112, 411, 412, 511, 512) performs precoding (229) by multiplying the modulation symbols for the respective antenna port (102, 103, 104, 105) with the respective row (571, 572) of a predefined modulation matrix (570) and in each case consecutively storing the respective precoded symbols of one antenna.

12. Test method according to any one of the preceding claims 8 to 11, wherein the physical channel processing for incoming data streams (113, 114, 313, 413, 414) comprises time estimation and cyclic prefix removal and/or OFDM generation and/or channel estimation and equalization and/or precoding (229), and

wherein for every antenna port (102, 103, 104, 105) one core (111, 112, 411, 412, 511, 512) performs time estimation and cyclic prefix removal and/or OFDM generation and/or channel estimation and equalization and/or precoding (229),
especially wherein for each antenna port (102, 103, 104, 105) one core (111, 112, 411, 412, 511, 512) performs precoding (229) by multiplying the modulation symbols for the respective antenna port (102, 103, 104, 105) with the respective row (571, 572) of a predefined modulation matrix (570) and in each case consecutively storing the respective precoded symbols of one antenna.

**Patentansprüche**

1. Testvorrichtung (100) zum Testen einer zu testenden Vorrichtung (101), wobei die Testvorrichtung (100) Folgendes umfasst:

    eine Anzahl von Antennenports (102, 103, 104, 105), die dafür ausgestaltet sind, von der zu testenden Vorrichtung (101) Signale (106, 107, 108, 109) zu empfangen und/oder Signale (106, 107, 108, 109) zu der zu testenden Vorrichtung (101) zu senden, und
    einen Prozessor (110, 410, 510) mit mindestens einem Kern (111, 112, 411, 412, 511, 512) für jeden einzelnen der Antennenports (102, 103, 104, 105), wobei jeder Kern (111, 112, 411, 412, 511, 512) dafür ausgestaltet ist, mindestens einen Teil der Physischen-Kanal-Verarbeitung für den jeweiligen Antennenport (102, 103, 104, 105) auszuführen,
    wobei die Physische-Kanal-Verarbeitung für abgehende Datenströme (113, 114, 313, 413, 414) das Verwürfeln (220, 221) des jeweiligen Datenstroms (113, 114, 313, 413, 414) umfasst,
    wobei für jeden abgehenden Datenstrom (113, 114, 313, 413, 414) mindestens zwei Kerne (111, 112, 411, 412, 511, 512) dafür ausgestaltet sind, ein paralleles Verwürfeln (220, 221) aufeinanderfolgender Datenblöcke des jeweiligen Datenstroms (113, 114, 313, 413, 414) auszuführen, indem eine Verwürfelungsfunktion (220, 221) mit einem varianten Parameter (356, 357, 358, 359, 360) angewendet wird, und
    wobei jeder Kern (111, 112, 411, 412, 511, 512) dafür ausgestaltet ist, den varianten Parameter (356, 357, 358, 359, 360) der Verwürfelungsfunktion (220, 221) für das erste Element jedes Blocks des jeweiligen Datenstroms (113, 114, 313, 413, 414), der durch den jeweiligen Kern (111, 112, 411, 412, 511, 512) verarbeitet wird, zu berechnen.

2. Testvorrichtung (100) nach Anspruch 1, wobei die Physische-Kanal-Verarbeitung für abgehende Datenströme (113, 114, 313, 413, 414) eine Modulation (222, 223) des jeweiligen Datenstroms (113, 114, 313, 413, 414) und/oder Schichtmapping (224) der Elemente der Datenströme (113, 114, 313, 413, 414) für die Antennenports (102, 103, 104, 105) und/oder Vorcodierung (229) der Elemente des Datenstroms (113, 114, 313, 413, 414) für die Antennenports (102, 103, 104, 105) umfasst.

3. Testvorrichtung (100) nach einem der vorangehenden Ansprüche, wobei für jeden abgehenden Datenstrom (113, 114, 313, 413, 414) mindestens zwei Kerne (111, 112, 411, 412, 511, 512) dafür ausgestaltet sind, eine parallele Modulation (222, 223) aufeinanderfolgender Datenblöcke des jeweiligen Datenstroms (113, 114, 313, 413, 414) auszuführen, indem für jedes Element des jeweiligen Blocks ein entsprechendes Modulationssymbol bestimmt wird.

4. Testvorrichtung (100) nach Anspruch 3, wobei für jeden Antennenport (102, 103, 104, 105) ein Kern (111, 112, 411, 412, 511, 512) dafür ausgestaltet ist, Schichtmapping (224) für die abgehenden Datenströme (113, 114, 313, 413, 414) auszuführen, indem die Modulationssymbole für die jeweilige Antenne gelesen werden und in jedem Fall die Modulationssymbole einer Antenne aufeinanderfolgend in einer dedizierten Speicherregion eines Speichers der Testvorrichtung (100) gespeichert werden.

5. Testvorrichtung (100) nach einem der vorangehenden Ansprüche 1 und 2, wobei für jeden Antennenport (102, 103, 104, 105) ein Kern (111, 112, 411, 412, 511, 512) dafür ausgestaltet ist, eine Modulation (222, 223) jeweiliger Elemente der Datenströme (113, 114, 313, 413, 414) auszuführen, indem für jedes Element ein entsprechendes Modulationssymbol bestimmt wird und in jedem Fall die Modulationssymbole einer Antenne aufeinanderfolgend in einer dedizierten Speicherregion einer Speicher der Testvorrichtung (100) gespeichert werden.

6. Testvorrichtung (100) nach einem der vorangehenden Ansprüche, wobei für jeden Antennenport (102, 103, 104, 105) ein Kern (111, 112, 411, 412, 511, 512) dafür ausgestaltet ist, eine Vorcodierung (229) auszuführen, indem die Modulationssymbole für den jeweiligen Antennenport (102, 103, 104, 105) mit der jeweiligen Reihe (571, 572) einer vorgegebenen Modulationsmatrix (570) multipliziert werden und in jedem Fall die jeweiligen vorcodierten Symbole einer Antenne aufeinanderfolgend gespeichert werden.

7.  Testvorrichtung (100) nach einem der vorangehenden Ansprüche, wobei die Physische-Kanal-Verarbeitung für ankommende Datenströme (113, 114, 313, 413, 414) Zeitschätzung und zyklisches Präfixentfernen und/oder OFDM-Generierung und/oder Kanalschätzung und -entzerrung und/oder -vorcodierung (229) umfasst, und wobei für jeden Antennenport (102, 103, 104, 105) ein Kern (111, 112, 411, 412, 511, 512) dafür ausgestaltet ist, Zeitschätzung und zyklisches Präfixentfernen und/oder OFDM-Generierung und/oder Kanalschätzung und -entzerrung und/oder -vorcodierung (229) auszuführen, wobei insbesondere für jeden Antennenport (102, 103, 104, 105) ein Kern (111, 112, 411, 412, 511, 512) dafür ausgestaltet ist, eine Vorcodierung (229) auszuführen, indem die Modulationssymbole für den jeweiligen Antennenport (102, 103, 104, 105) mit der jeweiligen Reihe (571, 572) einer vorgegebenen Modulationsmatrix (570) multipliziert werden und in jedem Fall die jeweiligen vorcodierten Symbole einer Antenne aufeinanderfolgend gespeichert werden.

8.  Testverfahren zum Testen einer zu testenden Vorrichtung (101), wobei das Testverfahren Folgendes umfasst:

Empfangen (S1) von Signalen (106, 107, 108, 109) von der zu testenden Vorrichtung (101) und/oder Senden von Signalen (106, 107, 108, 109) zu der zu testenden Vorrichtung (101) mit einer Anzahl von Antennenports (102, 103, 104, 105), und Ausführen (S2) mindestens eines Teils der Physischen-Kanal-Verarbeitung für jeden einzelnen der Antennenports (102, 103, 104, 105) mit mindestens einem dedizierten Kern (111, 112, 411, 412, 511, 512) eines Prozessors (110, 410, 510), wobei die Physische-Kanal-Verarbeitung für abgehende Datenströme (113, 114, 313, 413, 414) das Verwürfeln (220, 221) des jeweiligen Datenstroms (113, 114, 313, 413, 414) umfasst, wobei für jeden abgehenden Datenstrom (113, 114, 313, 413, 414) mindestens zwei Kerne (111, 112, 411, 412, 511, 512) ein paralleles Verwürfeln (220, 221) aufeinanderfolgender Datenblöcke des jeweiligen Datenstroms (113, 114, 313, 413, 414) ausführen, indem eine Verwürfelungsfunktion (220, 221) mit einem varianten Parameter (356, 357, 358, 359, 360) angewendet wird, und wobei jeder Kern (111, 112, 411, 412, 511, 512) den varianten Parameter (356, 357, 358, 359, 360) der Verwürfelungsfunktion (220, 221) für das erste Element jedes Blocks des jeweiligen Datenstroms (113, 114, 313, 413, 414), der durch den jeweiligen Kern (111, 112, 411, 412, 511, 512) verarbeitet, berechnet.

9.  Testverfahren nach Anspruch 8, wobei die Physische-Kanal-Verarbeitung für abgehende Datenströme (113, 114, 313, 413, 414) eine Modulation (222, 223) des jeweiligen Datenstroms (113, 114, 313, 413, 414) und/oder Schichtmapping (224) der Elemente der Datenströme (113, 114, 313, 413, 414) für die Antennenports (102, 103, 104, 105) und/oder Vorcodierung (229) der Elemente des Datenstroms (113, 114, 313, 413, 414) für die Antennenports (102, 103, 104, 105) umfasst.

10. Testverfahren nach einem der vorangehenden Ansprüche 8 bis 9, wobei für jeden abgehenden Datenstrom (113, 114, 313, 413, 414) mindestens zwei Kerne (111, 112, 411, 412, 511, 512) eine parallele Modulation (222, 223) aufeinanderfolgender Datenblöcke des jeweiligen Datenstroms (113, 114, 313, 413, 414) ausführen, indem für jedes Element des jeweiligen Blocks ein entsprechendes Modulationssymbol bestimmt wird, wobei insbesondere für jeden Antennenport (102, 103, 104, 105) ein Kern (111, 112, 411, 412, 511, 512) ein Schichtmapping (224) für die abgehenden Datenströme (113, 114, 313, 413, 414) ausführt, indem die Modulationssymbole für die jeweilige Antenne gelesen wird und in jedem Fall die Modulationssymbole einer Antenne in einer dedizierten Speicherregion eines Speichers der Testvorrichtung (100) aufeinanderfolgend gespeichert werden; oder wobei für jeden Antennenport (102, 103, 104, 105) ein Kern (111, 112, 411, 412, 511, 512) eine Modulation (222, 223) jeweiliger Elemente der Datenströme (113, 114, 313, 413, 414) ausführt, indem für jedes Element ein entsprechendes Modulationssymbol bestimmt wird und in jedem Fall die Modulationssymbole einer Antenne in einer dedizierten Speicherregion eines Speichers der Testvorrichtung (100) aufeinanderfolgend gespeichert werden.

11. Testverfahren nach einem der vorangehenden Ansprüche 8 bis 10, wobei für jeden Antennenport (102, 103, 104, 105) ein Kern (111, 112, 411, 412, 511, 512) eine Vorcodierung (229) ausführt, indem die Modulationssymbole für den jeweiligen Antennenport (102, 103, 104, 105) mit der jeweiligen Reihe (571, 572) einer vorgegebenen Modulationsmatrix (570) multipliziert werden und in jedem Fall die jeweiligen vorcodierten Symbole einer Antenne aufeinanderfolgend gespeichert werden.

12. Testverfahren nach einem der vorangehenden Ansprüche 8 bis 11, wobei die Physische-Kanal-Verarbeitung für ankommende Datenströme (113, 114, 313, 413, 414) eine Zeitschätzung und zyklisches Präfixentfernen und/oder OFDM-Generierung und/oder Kanalschätzung und -entzerrung und/oder -vorcodierung (229) umfasst, und

wobei für jeden Antennenport (102, 103, 104, 105) ein Kern (111, 112, 411, 412, 511, 512) eine Zeitschätzung und zyklisches Präfixentfernen und/oder OFDM-Generierung und/oder Kanalschätzung und -entzerrung und/oder -vorcodierung (229) ausführt,

wobei insbesondere für jeden Antennenport (102, 103, 104, 105) ein Kern (111, 112, 411, 412, 511, 512) eine Vorcodierung (229) ausführt, indem die Modulationssymbole für den jeweiligen Antennenport (102, 103, 104, 105) mit der jeweiligen Reihe (571, 572) einer vorgegebenen Modulationsmatrix (570) multipliziert werden und in jedem Fall die jeweiligen vorcodierten Symbole einer Antenne aufeinanderfolgend gespeichert werden.

## Revendications

1. Dispositif d'essai (100) pour mettre à l'essai un dispositif à l'essai (101), le dispositif d'essai (100) comprenant :

   un nombre de ports d'antenne (102, 103, 104, 105) configurés pour recevoir des signaux (106, 107, 108, 109) en provenance du dispositif à l'essai (101) et/ou transmettre des signaux (106, 107, 108, 109) au dispositif à l'essai (101), et

   un processeur (110, 410, 510) avec au moins un coeur (111, 112, 411, 412, 511, 512) pour chacun des ports d'antenne (102, 103, 104, 105), chaque coeur (111, 112, 411, 412, 511, 512) étant configuré pour réaliser au moins une partie du traitement de canal physique pour le port d'antenne (102, 103, 104, 105) respectif,

   dans lequel le traitement de canal physique pour des flux de données sortants (113, 114, 313, 413, 414) comprend l'embrouillage (220, 221) du flux de données (113, 114, 313, 413, 414) respectif,

   dans lequel pour chaque flux de données sortant (113, 114, 313, 413, 414) au moins deux coeurs (111, 112, 411, 412, 511, 512) sont configurés pour réaliser un embrouillage parallèle (220, 221) de blocs de données consécutifs du flux de données (113, 114, 313, 413, 414) respectif en appliquant une fonction d'embrouillage (220, 221) avec un paramètre variant (356, 357, 358, 359, 360), et

   dans lequel chaque coeur (111, 112, 411, 412, 511, 512) est configuré pour calculer le paramètre variant (356, 357, 358, 359, 360) de la fonction d'embrouillage (220, 221) pour le premier élément de chaque bloc du flux de données (113, 114, 313, 413, 414) respectif qui est traité par le coeur (111, 112, 411, 412, 511, 512) respectif.

2. Dispositif d'essai (100) selon la revendication 1, dans lequel le traitement de canal physique pour des flux de données sortants (113, 114, 313, 413, 414) comprend une modulation (222, 223) du flux de données (113, 114, 313, 413, 414) respectif et/ou une cartographie de couche (224) des éléments des flux de données (113, 114, 313, 413, 414) pour les ports d'antenne (102, 103, 104, 105) et/ou un précodage (229) des éléments du flux de données (113, 114, 313, 413, 414) pour les ports d'antenne (102, 103, 104, 105) .

3. Dispositif d'essai (100) selon l'une quelconque des revendications précédentes, dans lequel pour chaque flux de données sortant (113, 114, 313, 413, 414), au moins deux coeurs (111, 112, 411, 412, 511, 512) sont configurés pour réaliser une modulation parallèle (222, 223) de blocs de données consécutifs du flux de données (113, 114, 313, 413, 414) respectif en déterminant pour chaque élément du bloc respectif, un symbole de modulation correspondant.

4. Dispositif d'essai (100) selon la revendication 3, dans lequel pour chaque port d'antenne (102, 103, 104, 105), un coeur (111, 112, 411, 412, 511, 512) est configuré pour réaliser une cartographie de couche (224) pour les flux de données sortants (113, 114, 313, 413, 414) en lisant les symboles de modulation pour l'antenne respective et en stockant dans chaque cas les symboles de modulation d'une antenne consécutivement dans une région mémoire dédiée d'une mémoire du dispositif d'essai (100).

5. Dispositif d'essai (100) selon l'une quelconque des revendications 1 et 2 précédentes, dans lequel pour chaque port d'antenne (102, 103, 104, 105), un coeur (111, 112, 411, 412, 511, 512) est configuré pour réaliser une modulation (222, 223) d'éléments respectifs des flux de données (113, 114, 313, 413, 414) en déterminant pour chaque élément, un symbole de modulation correspondant et en stockant dans chaque cas les symboles de modulation d'une antenne consécutivement dans une région mémoire dédiée d'une mémoire du dispositif d'essai (100).

6. Dispositif d'essai (100) selon l'une quelconque des revendications précédentes, dans lequel pour chaque port d'antenne (102, 103, 104, 105), un coeur (111, 112, 411, 412, 511, 512) est configuré pour réaliser un précodage (229) en multipliant les symboles de modulation pour le port d'antenne (102, 103, 104, 105) respectif avec la ligne (571, 572) respective d'une matrice de modulation prédéfinie (570) et dans chaque cas en stockant consécutivement les symboles précodés respectifs d'une antenne.

7. Dispositif d'essai (100) selon l'une quelconque des revendications précédentes, dans lequel le traitement de canal physique pour des flux de données entrants (113, 114, 313, 413, 414) comprend une estimation de temps et un retrait de préfixe cyclique et/ou une génération OFDM et/ou une estimation et/ou égalisation et/ou un précodage de canal (229), et

dans lequel pour chaque port d'antenne (102, 103, 104, 105), un coeur (111, 112, 411, 412, 511, 512) est configuré pour réaliser une estimation de temps et un retrait de préfixe cyclique et/ou une génération OFDM et/ou une estimation et/ou une égalisation et/ou un précodage de canal (229), notamment dans lequel pour chaque port d'antenne (102, 103, 104, 105), un coeur (111, 112, 411, 412, 511, 512) est configuré pour réaliser un précodage (229) en multipliant les symboles de modulation pour le port d'antenne (102, 103, 104, 105) respectif avec la ligne respective (571, 572) d'une matrice de modulation prédéfinie (570) et dans chaque cas en stockant consécutivement les symboles précodés respectifs d'une antenne.

8. Procédé d'essai pour mettre à l'essai un dispositif à l'essai (101), le procédé d'essai comprenant :

la réception (S1) de signaux (106, 107, 108, 109) en provenance du dispositif à l'essai (101) et/ou la transmission de signaux (106, 107, 108, 109) au dispositif à l'essai (101) avec un nombre de ports d'antenne (102, 103, 104, 105), et

la réalisation (S2) d'au moins une partie du traitement de canal physique pour chacun des ports d'antenne (102, 103, 104, 105) avec au moins un coeur dédié (111, 112, 411, 412, 511, 512) d'un processeur (110, 410, 510), dans lequel le traitement de canal physique pour des flux de données sortants (113, 114, 313, 413, 414) comprend un embrouillage (220, 221) du flux de données (113, 114, 313, 413, 414) respectif, dans lequel pour chaque flux de données sortant (113, 114, 313, 413, 414), au moins deux coeurs (111, 112, 411, 412, 511, 512) réalisent un embrouillage parallèle (220, 221) de blocs de données consécutifs du flux de données (113, 114, 313, 413, 414) respectif en appliquant une fonction d'embrouillage (220, 221) avec un paramètre variant (356, 357, 358, 359, 360), et

dans lequel chaque coeur (111, 112, 411, 412, 511, 512) calcule le paramètre variant (356, 357, 358, 359, 360) de la fonction d'embrouillage (220, 221) pour le premier élément de chaque bloc du flux de données (113, 114, 313, 413, 414) respectif qui est traité par le coeur (111, 112, 411, 412, 511, 512) respectif.

9. Procédé d'essai selon la revendication 8, dans lequel le traitement de canal physique pour des flux de données sortants (113, 114, 313, 413, 414) comprend une modulation (222, 223) du flux de données (113, 114, 313, 413, 414) respectif et/ou une cartographie de couche (224) des éléments des flux de données (113, 114, 313, 413, 414) pour les ports d'antenne (102, 103, 104, 105) et/ou un précodage (229) des éléments du flux de données (113, 114, 313, 413, 414) pour les ports d'antenne (102, 103, 104, 105).

10. Procédé d'essai selon l'une quelconque des revendications 8 et 9 précédentes, dans lequel pour chaque flux de données sortant (113, 114, 313, 413, 414), au moins deux coeurs (111, 112, 411, 412, 511, 512) réalisent une modulation parallèle (222, 223) de blocs de données consécutifs du flux de données (113, 114, 313, 413, 414) respectif en déterminant pour chaque élément du bloc respectif, un symbole de modulation correspondant, notamment, dans lequel pour chaque port d'antenne (102, 103, 104, 105), un coeur (111, 112, 411, 412, 511, 512) réalise une cartographie de couche (224) pour les flux de données sortants (113, 114, 313, 413, 414) en lisant les symboles de modulation pour l'antenne respective et stocke dans chaque cas les symboles de modulation d'une antenne consécutivement dans une région mémoire dédiée d'une mémoire du dispositif d'essai (100) ; ou dans lequel pour chaque port d'antenne (102, 103, 104, 105), un coeur (111, 112, 411, 412, 511, 512) réalise une modulation (222, 223) d'éléments respectifs des flux de données (113, 114, 313, 413, 414) en déterminant pour chaque élément, un symbole de modulation correspondant et en stockant dans chaque cas les symboles de modulation d'une antenne consécutivement dans une région mémoire dédiée d'une mémoire du dispositif d'essai (100).

11. Procédé d'essai selon l'une quelconque des revendications 8 à 10 précédentes, dans lequel pour chaque port d'antenne (102, 103, 104, 105), un coeur (111, 112, 411, 412, 511, 512) réalise un précodage (229) en multipliant les symboles de modulation pour le port d'antenne (102, 103, 104, 105) respectif avec la ligne (571, 572) respective d'une matrice de modulation prédéfinie (570) et dans chaque cas en stockant consécutivement les symboles précodés respectifs d'une antenne.

12. Procédé d'essai selon l'une quelconque des revendications 8 à 11 précédentes, dans lequel le traitement de canal physique pour des flux de données entrants (113, 114, 313, 413, 414) comprend une estimation de temps et un retrait de préfixe cyclique et/ou une génération OFDM et/ou une estimation et/ou égalisation et/ou un précodage de canal (229), et

dans lequel pour chaque port d'antenne (102, 103, 104, 105), un coeur (111, 112, 411, 412, 511, 512) réalise une estimation de temps et un retrait de préfixe cyclique et/ou une génération OFDM et/ou une estimation et/ou une égalisation et/ou un précodage de canal (229),

notamment dans lequel pour chaque port d'antenne (102, 103, 104, 105), un coeur (111, 112, 411, 412, 511, 512) réalise un précodage (229) en multipliant les symboles de modulation pour le port d'antenne (102, 103, 104, 105) respectif avec la ligne respective (571, 572) d'une matrice de modulation prédéfinie (570) et dans chaque cas en stockant consécutivement les symboles précodés respectifs d'une antenne.

Fig. 1

Fig. 2

350  351  352
356  357
358  353  359  354  360  355

313

361

350  351  352

313  353  354  355  361

Fig. 3

465 466

411 410

467

413

414

465 466

412

468

Fig. 4

Fig. 5

Fig. 6

**EP 3 376 691 B1**

**Patent documents cited in the description**

- US 20140321582 A1